# EUROPEAN PATENT SPECIFICATION

(11) **EP 2 855 383 B1**
(45) Date of publication and mention of the grant of the patent: **16.06.2021**
(21) Application number: 13727497.3
(22) Date of filing: 28.05.2013
(51) Int. Cl.: C03C 3/095, C03C 3/097, C03C 21/00

(54) **ION EXCHANGEABLE TRANSITION METAL-CONTAINING GLASSES**
IONENAUSTAUSCHBARE ÜBERGANGSMETALLHALTIGE GLÄSER
VERRES CONTENANT UN MÉTAL DE TRANSITION À IONS ÉCHANGEABLES

(30) Priority: 31.05.2012 US 201261653495 P
(43) Date of publication of application: 08.04.2015
(73) Proprietor: Corning Incorporated, Corning, New York 14831 (US)
(72) Inventor: GUO, Xiaoju, Painted Post, New York 14870 (US); MAURO, John Christopher, Corning, New York 14830 (US); POTUZAK, Marcel, Corning, New York 14830 (US); SMEDSKJAER, Morten Mattrup, DK-9000 Aalborg (DK)
(74) Representative: Elkington and Fife LLP
(86) International application number: PCT/US2013/042805
(87) International publication number: WO 2013/181122

(56) References cited:
- JP-A- H01 122 936
- SU-A1- 1 100 252
- US-A- 3 485 702
- US-A- 3 778 335
- US-A1- 2005 003 136
- US-A1- 2010 047 521
- US-A1- 2010 087 307
- US-A1- 2011 274 916

## Description

### BACKGROUND

The disclosure relates to ion exchangeable glasses. More particularly, the disclosure relates to ion exchangeable glasses that comprise either transition metals or rare earth metals.

In applications such as cover plates or windows for portable or mobile electronic communication and entertainment devices, glasses are typically strengthened by either chemical or thermal means.
US 2011/0274916 A1 and US 2010/047521 A1 relate to ion-exchangeable and ion-exchanged alkali aluminosilicate glasses.
JP H01 122936 A relates to glass for coating metallic surfaces and SU 1100 252 A1 relates to aluminosilicate glass for prevention of cracks and improvement of corrosion resistance.

### SUMMARY

The present disclosure provides glasses that are ion exchangeable. The glasses comprise at least one of a transition metal oxide or a rare earth oxide and have compositions that simultaneously promote a surface layer having a high compressive stress and deep depth of layer or, alternatively, ion exchanged to a given compressive stress or depth of layer in a reduced ion exchange time.

The invention relates to an alkali aluminosilicate glass comprising from 62 mol% to 72 mol% SiO₂, from 5 mol% to 12 mol% Al₂O₃, from 12 mol% to 16 mol% Na₂O and from more than 1 mol% to 10 mol% of at least one metal oxide selected from the group consisting of Nb₂O₅, V₂O₅, Y₂O₃, and MnO₂, wherein Al₂O₃(mol%) - Na₂O(mol%) ≤ 2 mol%. The alkali aluminosilicate glass is ion exchanged and has a surface and a layer under compressive stress extending from the surface to a depth of layer. The compressive stress is at least 1 GPa and the depth of layer is at least 25 µm. Accordingly, one aspect of the disclosure is to provide an alkali aluminosilicate glass. The alkali aluminosilicate glass is ion exchangeable and comprises at least 50 mol% SiO₂, Al₂O₃, at least one metal oxide selected from the group consisting of transition metal oxides and rare earth metal oxides, and at least one alkali metal oxide R₂O, wherein the at least one alkali metal oxide includes Na₂O, and wherein Al₂O₃(mol%) - Na₂O(mol%) ≤ 2 mol%.

A second aspect of the disclosure is to provide an alkali aluminosilicate glass. The alkali aluminosilicate glass comprises at least 50 mol% SiO₂, Al₂O₃, at least one metal oxide selected from the group consisting of transition metal oxides and rare earth metal oxides, and at least one alkali metal oxide R₂O, wherein the at least one alkali metal oxide includes Na₂O, wherein Al₂O₃(mol%) - Na₂O(mol%) ≤ 2 mol%. The alkali aluminosilicate glass is ion exchanged and has a surface and a layer under compressive stress extending from the surface to a depth of layer, wherein the compressive stress is at least about 1 GPa and the depth of layer is at least about 20 µm.

A third aspect of the disclosure is to provide a method of making an ion exchanged alkali aluminosilicate glass. The method comprises providing an alkali aluminosilicate glass, the alkali aluminosilicate glass comprising at least 50 mol% SiO₂, Al₂O₃, at least one metal oxide selected from the group consisting of transition metal oxides and rare earth metal oxides, and at least one alkali metal oxide R₂O, wherein the alkali metal oxide includes Na₂O, and wherein Al₂O₃(mol%) - Na₂O(mol%) ≤ 2 mol%; and ion exchanging the alkali aluminosilicate glass for a predetermined time to form a layer under a compressive stress of at least about 1 GPa, the layer extending from a surface of the alkali aluminosilicate glass to a depth of layer.

These and other aspects, advantages, and salient features will become apparent from the following detailed description, the accompanying drawings, and the appended claims.

### BRIEF DESCRIPTION OF THE DRAWINGS

FIGURES la-f are plots of transmission ultraviolet-visible-near infrared (UV-Vis-NIR) spectra of glasses described herein, measured before and after ion exchange;
FIGURES 2a-e are plots of temperature dependence of the sodium-potassium interdiffusion coefficient for glasses selected from Tables la-d;
FIGURES 3a-e are plots of depth of layer as a function of compressive stress for annealed samples ion exchanged at 410°C in technical grade KNO₃ for 4, 8, and 16 hours;
FIGURE 4 is a plot showing the effect of substituting Nb₂O₅ for MgO on compressive stress at a fixed depth of layer of 50 µm and the ion exchange time required to achieve a depth of layer of 50 µm;
FIGURES 5a and 5b are plots showing the effect of substituting different oxides for Al₂O₃ on the compressive stress at a fixed depth of layer of 50 µm and the ion exchange time required to achieve a depth of layer of 50 µm; and
FIGURE 6 is a plot showing the effect of adding approximately 1.5 mol% on top of the base glass composition on the compressive stress at a fixed depth of layer of 50 µm and the ion exchange time required to achieve a depth of layer of 50 µm.

### DETAILED DESCRIPTION

In the following description, like reference characters designate like or corresponding parts throughout the several views shown in the figures. It is also understood that, unless otherwise specified, terms such as "top," "bottom," "outward," "inward," and the like are words of convenience and are not to be construed as limiting terms. In addition, whenever a group is described as comprising at least one of a group of elements and combinations thereof, it is understood that the group may comprise, consist essentially of, or consist of any number of those elements recited, either individually or in combination with each other. Similarly, whenever a group is described as consisting of at least one of a group of elements or combinations thereof, it is understood that the group may consist of any number of those elements recited, either individually or in combination with each other. Unless otherwise specified, a range of values, when recited, includes both the upper and lower limits of the range as well as any ranges therebetween. As used herein, the indefinite articles "a," "an," and the corresponding definite article "the" mean "at least one" or "one or more," unless otherwise specified. It also is understood that the various features disclosed in the specification and the drawings can be used in any and all combinations.

As used herein, the terms "glass" and "glasses" includes both glasses and glass ceramics. The terms "glass article" and "glass articles" are used in their broadest sense to include any object made wholly or partly of glass and/or glass ceramic. As used herein, the terms "alkali metal oxide" and "alkali oxide" refer to the oxides of the alkali metals and are considered to be equivalent terms. Similarly, the terms "alkaline earth metal oxide" and "alkaline earth oxide" refer to the oxides of the alkaline earth metals and are considered to be equivalent terms.

It is noted that the terms "substantially" and "about" may be utilized herein to represent the inherent degree of uncertainty that may be attributed to any quantitative comparison, value, measurement, or other representation. These terms are also utilized herein to represent the degree by which a quantitative representation may vary from a stated reference without resulting in a change in the basic function of the subject matter at issue.

Described herein are ion exchangeable glasses that may be used to produce chemically strengthened glass sheets by ion exchange. The compositions of these glasses are chosen to promote simultaneously high compressive stress and deep depth of layer or reduced ion exchange time by including at least one transition metal oxide or rare earth oxide in the glass composition. Not all of the glass compositions described herein are fusion formable, and may be produced by other methods known in the art, such as the float glass process or the slot draw process.

Accordingly, the alkali alumino silicate glasses disclosed herein comprise at least one of a transition metal oxide and a rare earth oxide, from 62 mole% to 72 mole% (mol%) SiO₂, from 5 mol% to 12 mol% alumina (Al₂O₃) from 12 mol% to 16 mol% Na₂O and from more than 1 mol% to 10 mol% of at least one metal oxide selected from the group consisting of Nb₂O₅, V₂O₅, Y₂O₃, and MnO₂, wherein Al₂O₃(mol%) - Na₂O(mol%) ≤ 2 mol%. When ion exchanged, the alkali alumino silicate glasses described herein have a layer (also referred to herein as a compressive layer) under a compressive stress CS of at least about 1 gigaPascal (GPa) that extends from at least one surface of the alkali aluminosilicate glass into the central portion of the glass to a depth of layer (depth of layer, or DOL). In some embodiments, the depth of layer DOL is at least 20 microns (µm) and, in other embodiments, at least 30 µm.

Non-limiting examples of the glass compositions described herein and selected properties are listed in Tables la-d. In the examples listed, six different transition metal oxides were each added to a crucible-melt base glass ("base" in Tables 1a, 2, and 3). These oxides were added either to the top of the base glass melt or partially substituted for an oxide. Compositions were analyzed by x-ray fluorescence and/or inductively coupled plasma (ICP). Anneal and strain points were determined by beam bending viscometry, and softening points were determined by parallel plate viscometry. The coefficients of thermal expansion (CTE) values in Tables la-d represent the average value between room temperature and 300°C. Liquidus temperatures reported in Tables la-d are for 24 hours, elastic moduli were determined by resonant ultrasound spectroscopy, and refractive indices are reported for 589.3 nm. Stress optic coefficient (SOC) was determined by the diametral compression method.

Glass color was observed on 1 mm thick glass samples and is reported in Table 2. Transmission ultraviolet-visible-near infrared (UV-Vis-NIR) spectra measured before and after ion exchange are shown in FIGS. la-f. In some embodiments, the glasses described herein are colored. In other embodiments, the glasses are free of any coloration.

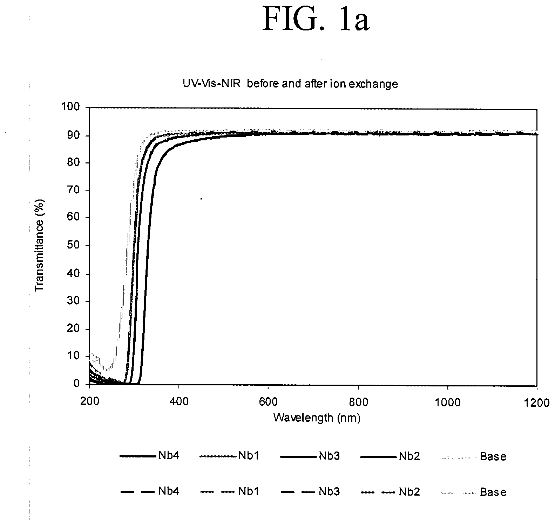

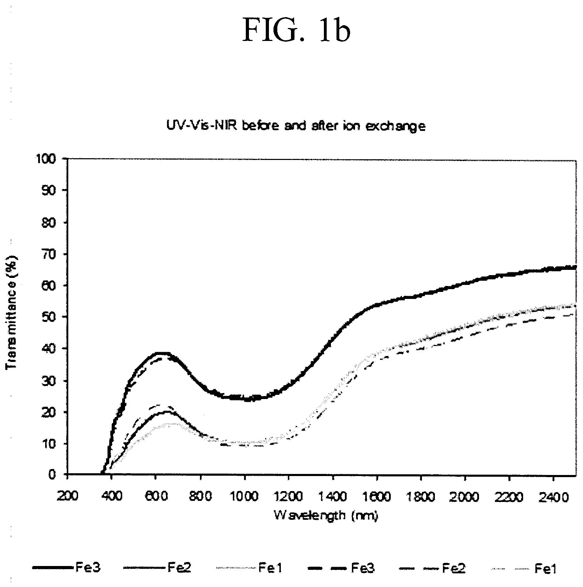

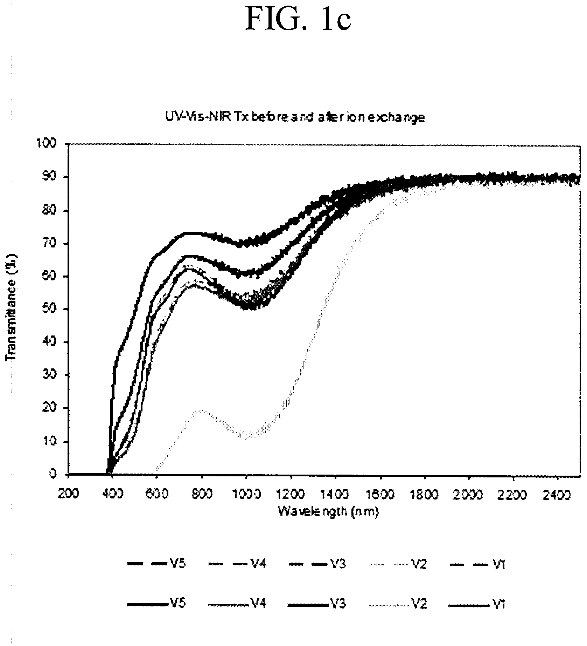

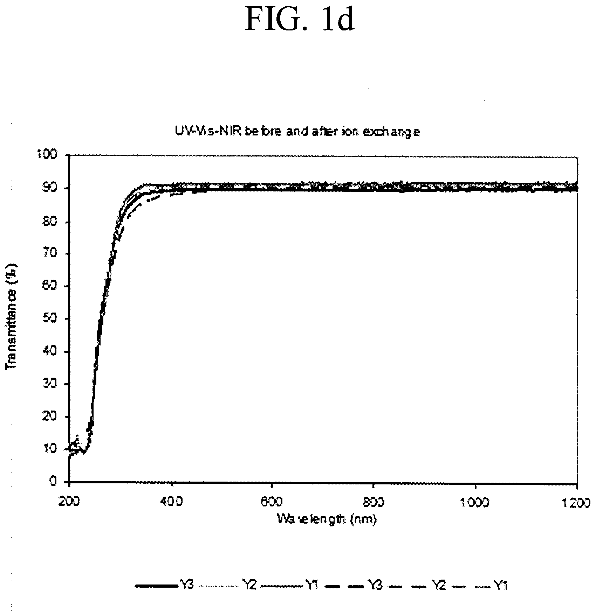

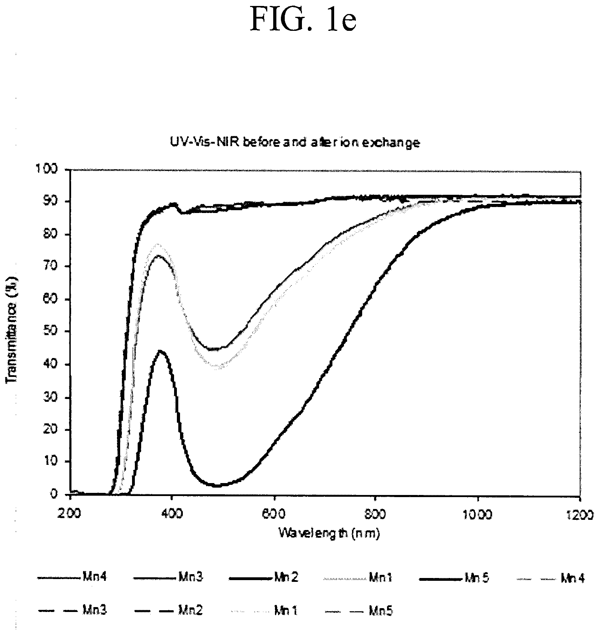

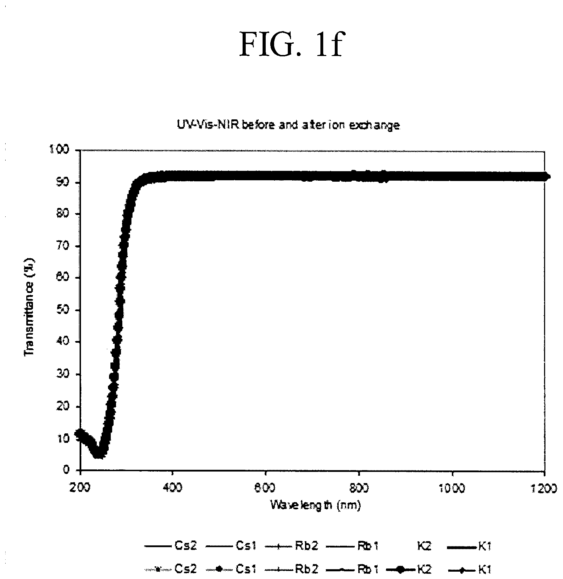

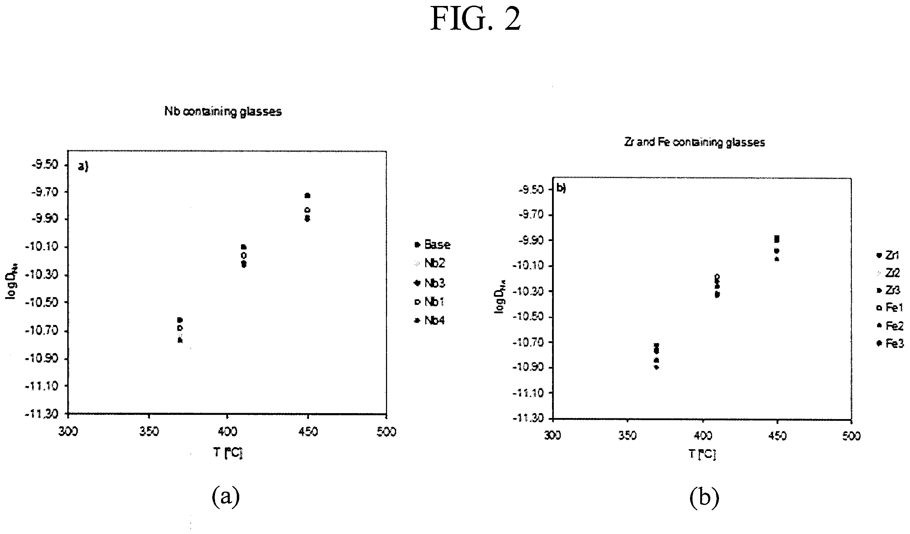

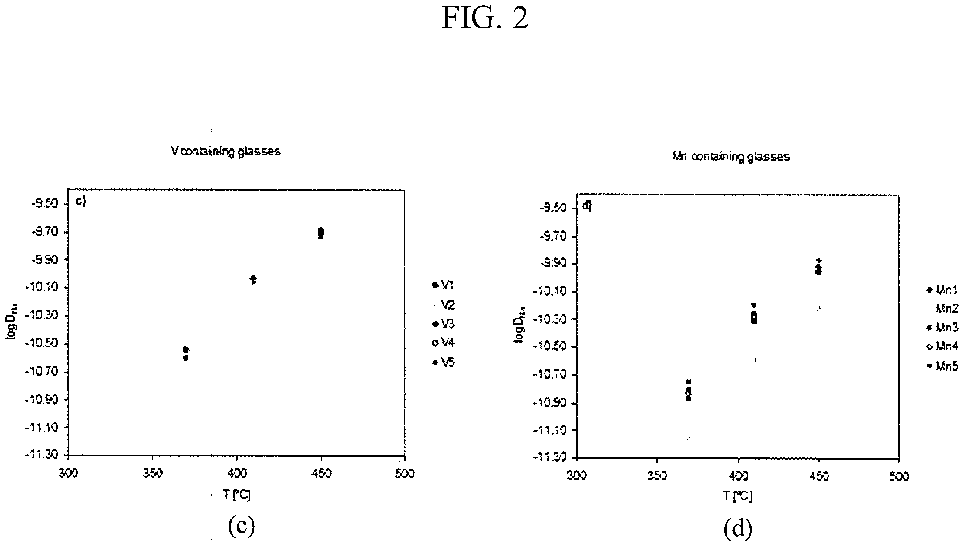

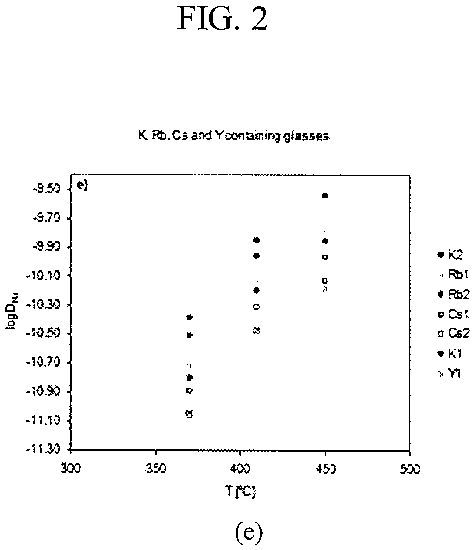

Properties of the glasses listed in Table la-d after ion exchange for fixed exchange times are provided in Table 2. Compressive stress (CS), expressed in megapascals (MPa), and depth of layer (DOL), expressed in microns (µm), were obtained as a result of treatment of annealed samples in molten salt baths comprising technical grade KNO₃. The ion exchange treatments were carried out in the molten salt baths at 410°C for 4, 8, and 16 hours, and for 8 hours at 370°C and 450°C. The temperature dependence of the sodium-potassium interdiffusion coefficient for glasses selected from Tables la-d are plotted in FIGS. 2a-e.

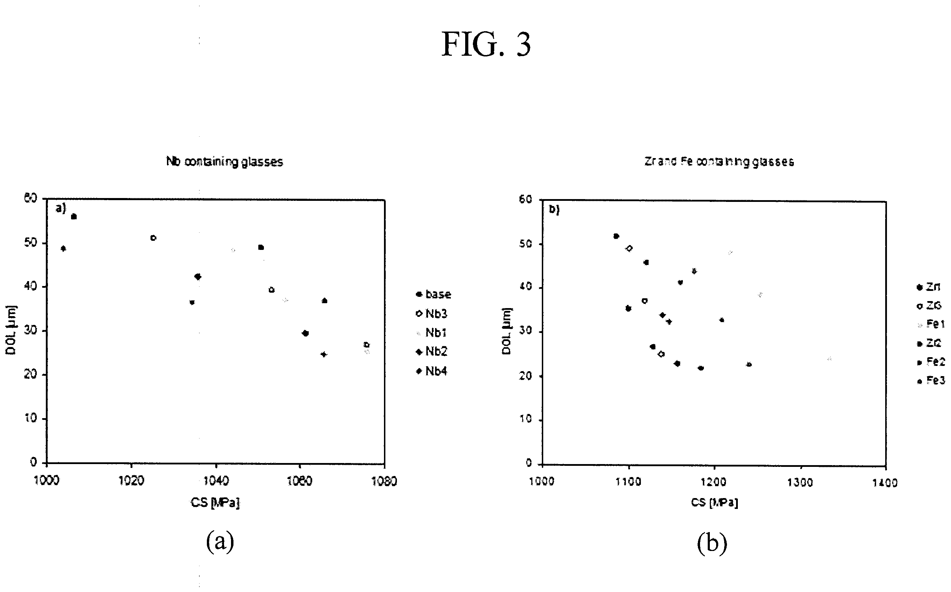

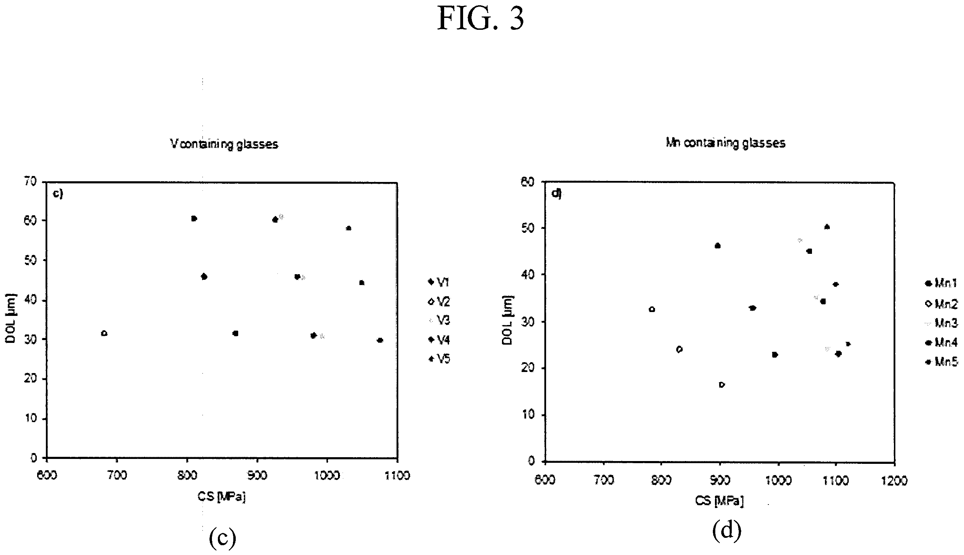

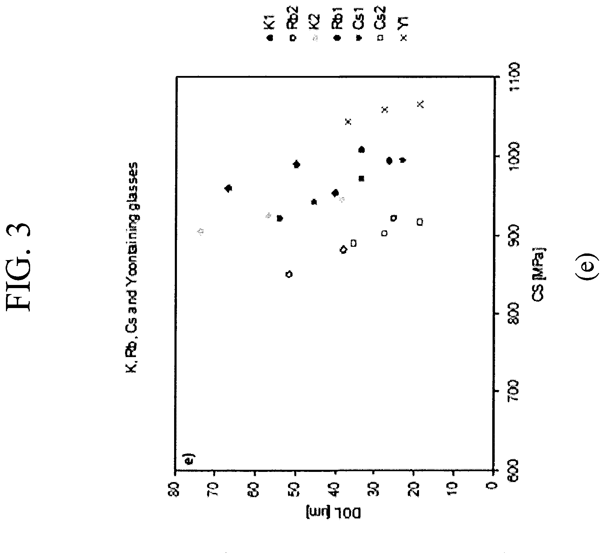

Times required to ion exchange glasses selected from the compositions listed in Tables 1a-d to a fixed depth of layer of 50 µm are listed in Table 3. The compressive stress at a fixed depth of layer of 50 µm and ion exchange time required to a depth of layer of 50 µm were calculated from ion exchange data obtained at 410°C for annealed samples immersed for various times in the technical grade KNO₃ salt bath. Values in parentheses in Table 3 indicate that the ion exchange properties of the glasses are inferior to those of the base glass composition, whereas values which are not parenthesized indicate that the ion exchange properties are superior to those of the base glass composition. Depth of layer is plotted as a function of compressive stress in FIGS. 3a-e for annealed samples ion exchanged at 410°C in technical grade KNO₃ for 4, 8, and 16 hours.

In the glass compositions described herein, SiO₂ serves as the primary glass-forming oxide, and comprises from about 62 mol% to about 72 mol% of the glass. The concentration of SiO₂ is high enough to provide the glass with high chemical durability that is suitable for applications such as, for example, touch screens or the like. However, the melting temperature (200 poise temperature, T₂₀₀) of pure SiO₂ or glasses containing higher levels of SiO₂ is too high, since defects such as fining bubbles tend to appear in the glass. In addition, SiO₂, in comparison to most oxides, decreases the compressive stress created by ion exchange. Accordingly, in some of the glasses described herein, transition metal oxides and/or rare earth oxides are substituted for SiO₂.

Alumina (Al₂O₃), which comprises from about 5 mol% to about 12 mol% of the glasses described herein, may also serve as a glass former. Like SiO₂, alumina generally increases the viscosity of the melt. An increase in Al₂O₃ relative to the alkalis or alkaline earths generally results in improved durability of the glass. The structural role of the aluminum ions depends on the glass composition. When the concentration of alkali metal oxides R₂O is greater than that of alumina, all aluminum is found in tetrahedral, four-fold coordination with the alkali metal ions acting as charge-balancers. This is the case for all of the glasses described herein. Divalent cation oxides (RO) can also charge balance tetrahedral aluminum to various extents. Elements such as calcium, strontium, and barium behave equivalently to two alkali ions, whereas the high field strength of magnesium ions cause them to not fully charge balance aluminum in tetrahedral coordination, resulting instead in formation of five- and six-fold coordinated aluminum. Al₂O₃ enables a strong network backbone (i.e., high strain point) while allowing relatively fast diffusivity of alkali ions, and thus plays an important role in ion-exchangeable glasses. High Al₂O₃ concentrations, however, generally lower the liquidus viscosity of the glass. One alternative is to partially substitute other oxides for Al₂O₃ while maintaining or improving ion exchange performance of the glass.

The glasses described herein comprise from about 12 mol% to about 16 mol% Na₂O and, optionally, at least one other alkali oxide such as, for example, K₂O. Alkali oxides (Li₂O, Na₂O, K₂O, Rb₂O, and Cs₂O) serve as aids in achieving low melting temperature and low liquidus temperatures of glasses. The addition of alkali oxides, however, increases the coefficient of thermal expansion (CTE) and lowers the chemical durability of the glass. In order to achieve ion exchange, a small alkali oxide (such as, for example, Li₂O and Na₂O) must be present in the glass to exchange with larger alkali ions (e.g., K⁺) from a molten salt bath. Three types of ion exchange may typically be carried out: Na⁺-for-Li⁺ exchange, which results in a deep depth of layer but low compressive stress; K⁺-for-Li⁺ exchange, which results in a small depth of layer but a relatively large compressive stress; and K⁺-for-Na⁺ exchange, which results in an intermediate depth of layer and compressive stress. A sufficiently high concentration of the small alkali oxide is necessary to produce a large compressive stress in the glass, since compressive stress is proportional to the number of alkali ions that are exchanged out of the glass. Accordingly, the glasses described herein comprise from 12 mol% to about 16 mol% Na₂O. The presence of a small amount of K₂O generally improves diffusivity and lowers the liquidus temperature of the glass, but increases the CTE (Table 1d). Partial substitutions of Rb₂O and/or Cs₂O for Na₂O decrease CS and DOL (Tables 3 and 4). While K⁺-for-Na⁺ exchange is described for the transition metal containing glasses described herein, ion exchange between alkali cation pairs (e.g., Na⁺-for-Li⁺ or Rb⁺-for K⁺) are within the scope of this disclosure.

Divalent cation oxides (such as alkaline earth oxides and ZnO) also improve the melting behavior of the glass. With respect to ion exchange performance, however, the presence of divalent cations tends to decrease alkali mobility. The effect of divalent ions on ion exchange performance is especially pronounced with larger divalent cations such as, for example, SrO, BaO, and the like. Furthermore, smaller divalent cation oxides generally enhance compressive stress more than larger divalent cations. MgO and ZnO, for example, offer several advantages with respect to improved stress relaxation while minimizing adverse effects on alkali diffusivity. Higher concentrations of MgO and ZnO, however, promote formation of forsterite (Mg₂SiO₄) and gahnite (ZnAl₂O₄), or willemite (Zn₂SiO₄), thus causing the liquidus temperature of the glass to rise very steeply with increasing MgO and/or ZnO content. MgO is the only divalent cation oxide in the glasses described herein. In some embodiments, transition metal oxides are substituted for at least a portion of the MgO in the glass while maintaining or improving the ion exchange performance of the glass.

Glasses typically also contain oxides that are added to eliminate and reduce defects, such as gaseous inclusions or "seeds," within the glass. In some embodiments, the glasses described herein comprise SnO₂ in the usual role as a fining agent. Alternatively, other oxides such as, but not limited to, As₂O₃ and/or Sb₂O₃ may serve as fining agents. The fining capacity is generally increased by increasing the concentration of SnO₂ (or As₂O₃ and/or Sb₂O₃) but, as these oxides are comparatively expensive raw materials, it is desirable to add no more than is required to drive the concentration of gaseous inclusions to an appropriately low level.

In addition to the oxides described above, the glasses described herein further comprise at least one transition metal oxide and/or rare earth oxide. In some embodiments, these transition metal oxides and rare earth oxides include Nb₂O₅, V₂O₅, Y₂O₃, and MnO₂. The structural roles of these oxides and other oxides and their impact on the ion exchange properties (CS and DOL) are described below.

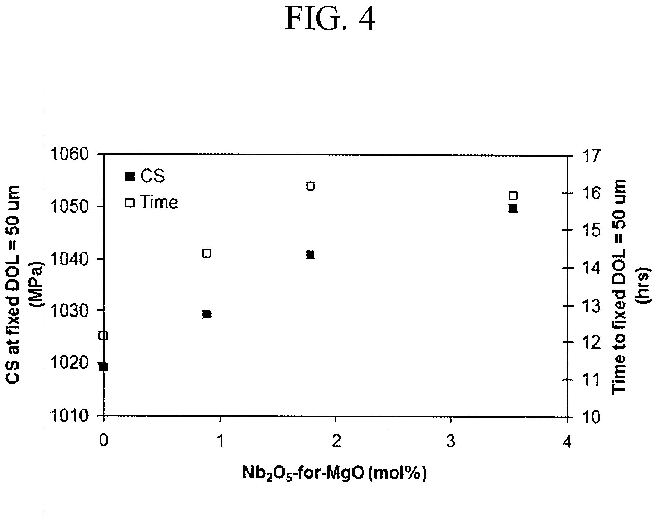

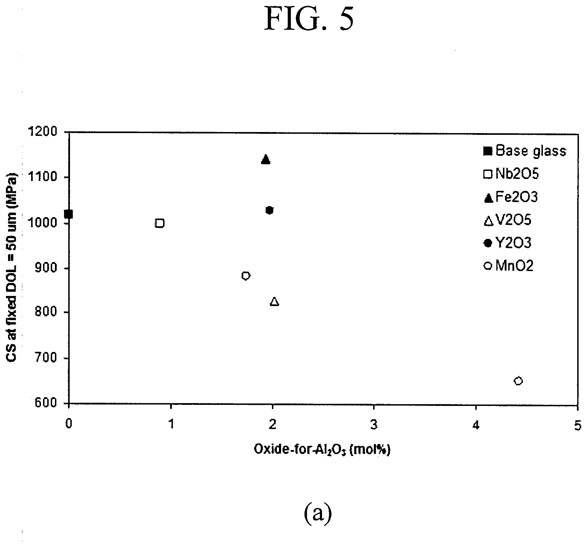

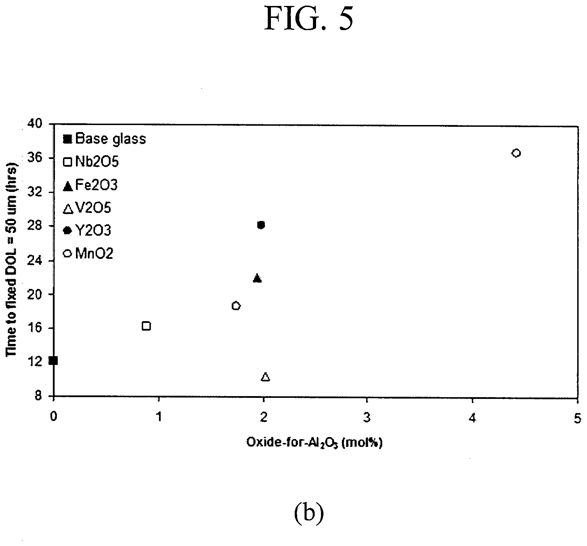

The introduction of Nb₂O₅ in silicate glasses has been used in materials with, for example, non-linear optical coefficient and laser glasses of high-stimulated emission parameters. Nb₂O₅ acts as a network former even in low concentrations, as it forms Si-O-Nb network bonds. This substitution increases the anneal point, refractive index, and elastic moduli of the glass, but lowers the liquidus viscosity (Table la). With increasing degrees of substitution of Nb₂O₅ for MgO, the compressive stress created by ion exchange at 410°C to a fixed DOL of 50 µm increases but the ion exchange time required to reach 50 µm DOL also increases (FIG. 4). Substituting Nb₂O₅ for Al₂O₃ lowers both CS and DOL (FIGS. 5a and 5b). In summary, Nb₂O₅ adversely affects diffusivity, but may be used to increase the compressive stress when substituted for MgO (Tables 2 and 3).

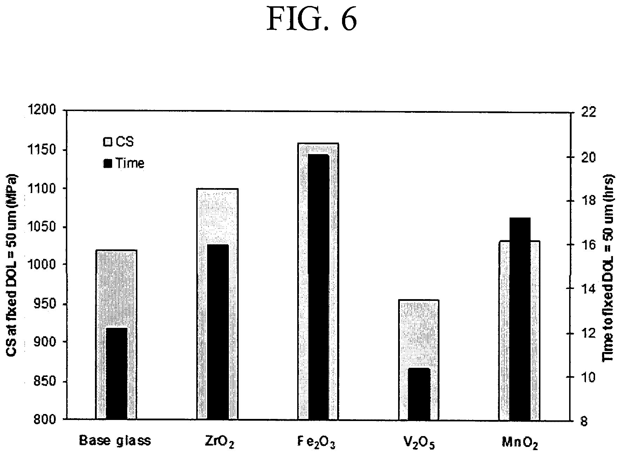

Zirconia (ZrO₂) helps to improve the chemical durability of the glass. In the presence of charge-compensating cations, six-fold coordinated zirconium is inserted in the silicate network by forming Si-O-Zr bonds. Hence, the [ZrO₆]²⁻ groups are charge-compensated by two positive charges; i.e., either two alkali ions or one alkaline earth ion. Because SiO₂ generally decreases the compressive stress due to ion exchange, ZrO₂ is partially substituted for SiO₂ in some of the glasses described herein. Zirconia substitution increases the anneal point, refractive index, and elastic moduli of the glass, but lowers the liquidus viscosity (Table la). With respect to ion exchange performance, the substitution of ZrO₂ for SiO₂ dramatically increases the CS at a fixed DOL of 50 µm, whereas the time required to ion exchange the glass to a DOL of 50 µm increases (Table 3). Adding 1.5 mol% ZrO₂ on top of the base glass composition and scaling all other oxides proportionally also increases CS and decreases DOL (FIG. 6).

Iron is present in glasses as Fe²⁺, Fe³⁺, or metallic free iron (Fe⁰). Unless reducing melting conditions are employed, however, only Fe²⁺ and Fe³⁺ will be present in significant concentrations. The structural roles of Fe²⁺ and Fe³⁺ differ markedly. Depending on the ratio [Fe³⁺]/[ΣFe], where [Fe³⁺] is the Fe³⁺ concentration and [ΣFe] is the total concentration of Fe²⁺ and Fe³⁺, Fe³⁺ can act as a network former (coordination number IV or V) and/or a network modifier (coordination number V or VI), whereas Fe²⁺ iron is generally considered to be a network modifier. As both ferric and ferrous iron can be present in liquids, changes in the oxidation state of iron can significantly affect the degree of iron polymerization. Therefore, any melt property that depends on the number of non-bridging oxygens (NBO) per tetrahedron (NBO/T) will also be affected by the ratio [Fe³⁺]/[ΣFe]. The structural role of Fe²⁺ is thus similar to that of Mg²⁺ or Ca²⁺. The structural role of Fe³⁺ is similar to that of Al³⁺, as tetrahedral Fe³⁺ also requires the presence of charge-compensating cations. In certain embodiments of the glasses described herein, iron oxide is substituted for both MgO and Al₂O₃ (Table 1b). Due to the intense dark coloring of these iron-containing glasses, it was not possible to determine their SOC. Consequently, the SOC value of the base glass was used as an approximate value when calculating compressive stresses resulting from ion exchange. Substitution of iron for aluminum significantly increases CS and decreases DOL (FIGS. 5a and 5b). This is also the case for the substitution of iron for magnesium, but in this case the increase in CS is even larger and the increase in diffusivity smaller (Tables 2 and 3). Adding iron on top of the base glass composition also increases CS and decreases DOL (FIG. 6). Iron is therefore a powerful oxide for increasing the compressive stress, even when the amount of Al₂O₃, which is normally a very good oxide for enhancing the compressive stress, is reduced.

Vanadium is another oxide that exists in different redox states in glasses and thus possesses different structural roles depending on the redox state. Usually, vanadium occurs in the states of V³⁺, V⁴⁺, and V⁵⁺ in glasses. The role of V⁵⁺ may be similar to that of P⁵⁺; i.e., V⁵⁺ can remove modifiers such as, for example, Na⁺, from the silicate network to form various alkali vanadate species. Hence, V₂O₅ can be present in various phosphate-like structural units such as pyrovanadate and metavanadate units. P₂O₅ is known to dramatically increase DOL and decrease CS. In some embodiments of the glasses described herein, V₂O₅ has been introduced into the base glass in various ways (Table 1b). Substituting V for Al increases DOL, but dramatically lowers CS (FIG. 6). The decrease in CS is smaller when V₂O₅ is added on the top of the base glass or substituted for SiO₂ (Tables 2 and 3). The presence of vanadium, like phosphorus, in the glass generally increases the ion exchange interdiffusivity. Since Al₂O₃ is also good for increasing CS, V₂O₅ was added together with Al₂O₃ and taking out SiO₂ (to keep the viscosity at a reasonable value) in some embodiments of the glasses described herein. This substitution increases both CS and DOL (Tables 2 and 3).

Silicate glasses containing yttria (Y₂O₃) generally have high glass transition temperatures, low electrical conductivity, and high chemical durability. The trivalent cation Y³⁺ is chemically similar to Al³⁺. In the glasses described herein, Y₂O₃ is partially substituted for Al₂O₃ at levels of 2, 5, and 10 mol% (Table 1c). When 2 mol% Y₂O₃ was substituted for Al₂O₃, a small increase in compressive stress was observed and the diffusivity decreased. Compressive stress and depth of layer could not be determined for samples in which 5 and 10 mol% Y₂O₃ were substituted for Al₂O₃. Hence, the role Y₂O₃ is very different from that of Al₂O₃ with respect to ion exchange properties.

Manganese ions mostly exist in glasses in the Mn²⁺ and Mn³⁺ oxidation states. Mn²⁺ occupies primarily network-forming positions within MnO₄ structural units, whereas Mn³⁺ occupies mostly network-modifying positions. The influence of manganese on ion exchange performance should thus strongly depend on the redox chemistry. When MnO₂ is substituted for Al₂O₃, both CS and DOL decrease dramatically (FIGS. 5a and 5b). Hence, its structural role is very different from that of Al₂O₃. On the other hand, when MnO₂ is added on the top or substituted for SiO₂, CS increases while the DOL increases (Tables 2 and 3). MnO₂ can be used to increase the compressive stress, but there is a corresponding decrease in diffusivity. Adding MnO₂ with Al₂O₃ and taking out SiO₂ produces the highest increase in CS and smallest decrease in DOL (Tables 2 and 3).

**Table 1a. Compositions and properties of the base alkali aluminosilicate glass, glasses in which niobium oxide was substituted for magnesium oxide or alumina, and glasses in which zirconium oxide was substituted for silicon oxide or added directly to the base glass. In the following table glasses Nbl, Nb4 and Zr1 to Zr3 do not fall within the scope of claim 1 and are provided for reference purposes only.**

| | **Base** | **Nb1** | **Nb2** | **Nb3** | **Nb4** | **Zr1** | **Zr2** | **Zr3** |
|---|---|---|---|---|---|---|---|---|
| **Composition (mol %)** | **Base Glass** | **Nb for Mg** | **Nb for Mg** | **Nb for Mg** | **Nb for Al** | **Zr for Si** | **Zr for Si** | **Zr on top** |
| SiO₂ | 69.32 | 69.07 | 69.23 | 69.13 | 69.09 | 68.33 | 67.13 | 68.09 |
| Al₂O₃ | 10.66 | 10.61 | 10.59 | 10.59 | 9.71 | 10.62 | 10.65 | 10.49 |
| MgO | 5.26 | 4.52 | 3.57 | 1.85 | 5.38 | 5.25 | 5.42 | 5.33 |
| Na₂O | 14.65 | 14.81 | 14.74 | 14.80 | 14.83 | 14.73 | 14.78 | 14.54 |
| Nb₂O₅ | | 0.89 | 1.79 | 3.54 | 0.89 | | | |
| ZrO₂ | | | | | | 0.98 | 1.93 | 1.46 |
| Fe₂O₃ | | | | | | | | |
| V₂O₅ | | | | | | | | |
| Y₂O₃ | | | | | | | | |
| MnO₂ | | | | | | | | |
| SnO₂ | 0.10 | 0.10 | 0.09 | 0.09 | 0.10 | 0.09 | 0.09 | 0.09 |
| | | | | | | | | |

| **Properties** | **Base** | **Nb1** | **Nb2** | **Nb3** | **Nb4** | **Zr1** | **Zr2** | **Zr3** |
|---|---|---|---|---|---|---|---|---|
| Anneal Pt (°C): | 663.5 | 673.2 | 677.1 | 680.2 | 660.5 | 683.6 | 699.6 | 694.6 |
| Strain Pt (°C): | 613.2 | 624.5 | 628.5 | 634.5 | 611.8 | 633.8 | 649 | 643.7 |
| Softening Pt (°C): | 905.3 | 903.6 | 907.4 | 893 | 892.6 | 920.8 | 936.6 | 934.1 |
| Glass color | transparent | light yellow | light yellow | light yellow | light yellow | transparent | transparent | transparent |
| Density (g/cm³): | 2.429 | 2.473 | 2.513 | 2.586 | 2.477 | 2.460 | 2.492 | 2.473 |
| CTE (x10⁻⁷/°C): | 79.6 | 78.5 | 77 | 74.6 | 77.9 | 81.1 | 78.8 | 78.9 |
| Liquidus Temp (°C): | 1075 | 1035 | 1070 | 1150 | 1040 | 1110 | 1250 | 1210 |
| Primary Devit Phase: | Forsterite | Forsterite | Unknown | Unknown | Forsterite | Forsterite | Unknown | Zircon |
| Liquidus Visc. (Poise): | 418339 | 787862 | 305069 | 41156 | 402012 | 264896 | 17111 | 43660 |
| Poisson's Ratio: | 0.207 | 0.21 | 0.214 | 0.209 | 0.206 | 0.211 | 0.218 | 0.214 |
| Shear Modulus (Mpsi): | 4.27 | 4.335 | 4.351 | 4.399 | 4.332 | 4.361 | 4.447 | 4.399 |
| Young's Modulus (Mpsi): | 10.307 | 10.488 | 10.561 | 10.64 | 10.453 | 10.559 | 10.834 | 10.685 |
| Refractive Index: | 1.50056 | 1.51177 | 1.52260 | 1.54472 | 1.51284 | 1.50668 | 1.51367 | 1.50949 |
| SOC (nm/cm/MPa): | 29.53 | 30.19 | 30.77 | 32.34 | 29.9 | 29.9 | 30.13 | 30.12 |

**Table 1b. Compositions and properties of glasses in which iron oxide was substituted for magnesium oxide, aluminum oxide, or added to the base glass composition, and glasses in which vanadium oxide was substituted for alumina, silica, or added to the base composition. In the following table glasses Fe1 to Fe3 do not fall within the scope of claim 1 and are provided for reference purposes only.**

| | **Fe1** | **Fe2** | **Fe3** | **V1** | **V2** | **V3** | **V4** | **V5** |
|---|---|---|---|---|---|---|---|---|
| **Composition (mol %)** | **Fe for Mg** | **Fe for Al** | **Fe on top** | **V for Al** | **V for Al** | **V on top** | **V for Si** | **V-Al for Si** |
| SiO₂ | 68.94 | 69.04 | 68.14 | 68.12 | 68.91 | 67.22 | 66.33 | 66.02 |
| Al₂O₃ | 10.97 | 8.89 | 10.46 | 8.44 | 5.62 | 10.26 | 10.38 | 11.45 |
| MgO | 3.51 | 5.50 | 5.42 | 5.74 | 5.67 | 5.41 | 5.54 | 5.49 |
| Na₂O | 14.55 | 14.55 | 14.44 | 15.56 | 14.76 | 15.45 | 15.63 | 15.86 |
| Nb₂O₅ | | | | | | | | |
| ZrO₂ | | | | | | | | |
| Fe₂O₃ | 1.93 | 1.94 | 1.43 | | | | | |
| V₂O₅ | | | | 2.02 | 4.95 | 1.55 | 2.01 | 1.06 |
| Y₂O₃ | | | | | | | | |
| MnO₂ | | | | | | | | |
| SnO₂ | 0.10 | 0.10 | 0.10 | 0.11 | 0.10 | 0.12 | 0.11 | 0.12 |
| | | | | | | | | |

| **Properties** | **Fe1** | **Fe2** | **Fe3** | **V1** | **V2** | **V3** | **V4** | **V5** |
|---|---|---|---|---|---|---|---|---|
| Anneal Pt. (°C): | 634.7 | 616.8 | 642.4 | 596.1 | 522.1 | 633.6 | 617.9 | 654.8 |
| Strain Pt. (°C): | 586.1 | 569 | 594 | 550.8 | 477.1 | 585.3 | 572.3 | 605.6 |
| Softening Pt. (°C): | 892.8 | 846.1 | 888.6 | 825.7 | 719.7 | 873.3 | 850.5 | 895.5 |
| Glass color | black/ brown | brown | brown | brown/ yellow | black | brown/ yellow | brown/ yellow | light brown/ yellow |
| Density (g/cm³): | 2.472 | 2.479 | 2.470 | 2.442 | 2.463 | 2.442 | 2.451 | 2.446 |
| CTE (x10⁻⁷/°C): | 81.5 | 82.0 | 80.4 | 83.0 | 90.5 | 80.5 | 81.6 | 82.4 |
| Liquidus Temp. (°C): | 1250 | 1250 | 1170 | 975 | 920 | 1110 | 1110 | 1160 |
| Primary Devit Phase: | Unknown | Unknown | Forsterite | Albite | Unknown | Forsterite | Forsterite | Forsterite |
| Liquidus Visc. (Poise): | | | | | | | | |
| Poisson's Ratio: | 0.214 | 0.221 | 0.212 | 0.22 | 0.221 | 0.237 | 0.216 | 0.219 |
| Shear Modulus (Mpsi): | 4.242 | 4.232 | 4.311 | 4.002 | 3.709 | 4.113 | 4.081 | 4.199 |
| Young's Modulus (Mpsi): | 10.304 | 10.333 | 10.445 | 9.768 | 9.059 | 10.173 | 9.923 | 10.235 |
| Refractive Index: | 1.51540 | 1.51670 | 1.51360 | 1.51560 | 1.54070 | 1.51366 | 1.51706 | 1.51006 |
| SOC (nm/cm/MPa): | | | | 29.17 | 28.65 | 29.59 | 29.42 | 29.5 |

**Table 1c. Compositions and properties of glasses in which yttrium oxide was substituted for aluminum oxide, and glasses in which manganese oxide was substituted for alumina, silica, or added to the base composition. In the following table glasses Y2 and Mn5 do not fall within the scope of claim 1 and are provided for reference purposes only.**

| | **Y1** | **Y2** | **Y3** | **Mn1** | **Mn2** | **Mn3** | **Mn4** | **Mn5** |
|---|---|---|---|---|---|---|---|---|
| **Composition (mol %)** | **Y for Al** | **Y for Al** | **Y for Al** | **Mn for Al** | **Mn for Al** | **Mn on top** | **Mn for Si** | **Mn-Al for Si** |
| SiO₂ | 68.72 | 68.98 | 68.47 | 69.10 | 68.68 | 67.76 | 66.98 | 66.95 |
| Al₂O₃ | 8.76 | 5.62 | 0.07 | 8.50 | 5.67 | 10.43 | 10.56 | 11.63 |
| MgO | 5.60 | 5.12 | 5.31 | 5.65 | 6.11 | 5.57 | 5.61 | 5.57 |
| Na₂O | 14.84 | 15.18 | 15.99 | 14.91 | 15.02 | 14.74 | 14.97 | 14.87 |
| Nb₂O₅ | | | | | | | | |
| ZrO₂ | | | | | | | | |
| Fe₂O₃ | | | | | | | | |
| v₂O₅ | | | | | | | | |
| Y₂O₃ | 1.98 | 5.01 | 10.07 | | | | | |
| MnO₂ | | | | 1.75 | 4.42 | 1.33 | 1.77 | 0.90 |
| SnO₂ | 0.10 | 0.08 | 0.09 | 0.09 | 0.09 | 0.17 | 0.10 | 0.09 |
| | | | | | | | | |

| **Properties** | **Y1** | **Y2** | **Y3** | **Mn1** | **Mn2** | **Mn3** | **Mn4** | **Mn5** |
|---|---|---|---|---|---|---|---|---|
| Anneal Pt. (°C): | 671.3 | 677.7 | 697.5 | 617.7 | 569.7 | 651.3 | 644.6 | 668.6 |
| Strain Pt. (°C): | 624.1 | 632.1 | 655.3 | 570.9 | 525.5 | 603.2 | 595.3 | 619.6 |
| Softening Pt. (°C): | 883.9 | 880.1 | 871.1 | 844.7 | 773.9 | 884.7 | 876.2 | 909 |
| Glass color | transparent | transparent | transparent | light red/ pink | red/pink | light red/ pink | light red/ pink | light red/pink |
| Density (g/cm³): | 2.539 | 2.703 | 3.016 | 2.457 | 2.504 | 2.46 | 2.467 | 2.453 |
| CTE (x10⁻⁷/°C): | 79.9 | 80.3 | | 86.5 | 87.7 | 83.1 | 85.4 | 85.6 |
| Liquidus Temp. (°C): | | | | 965 | 870 | 1095 | 1100 | 1140 |
| Primary Devit Phase: | | | | Albite | Unknown | Forsterite | Forsterite | Forsterite |
| Liquidus Visc. (Poise): | | | | | | | | |
| Poisson's Ratio: | 0.22 | 0.221 | 0.249 | 0.225 | 0.219 | 0.228 | 0.224 | 0.216 |
| Shear Modulus (Mpsi): | 4.443 | 4.693 | 5.146 | 4.239 | 4.223 | 4.303 | 4.313 | 4.316 |
| Young's Modulus (Mpsi): | 10.844 | 11.459 | 12.852 | 10.384 | 10.299 | 10.566 | 10.562 | 10.493 |
| Refractive Index: | 1.51677 | 1.54113 | 1.58671 | 1.50600 | 1.51460 | 1.50560 | 1.50750 | 1.50510 |
| SOC (nm/cm/MPa): | 29.22 | 28.09 | 25.51 | 29.43 | 29.28 | 29.59 | 29.44 | 29.69 |

**Table 1d. Compositions and properties of glasses in which potassium oxide, rubidium oxide, or cesium oxide were substituted for sodium oxide. The glasses of Table 1d do not fall within the scope of claim 1 and are provided for reference purposes only.**

| | **K1** | **K2** | **Rb1** | **Rb2** | **Cs1** | **Cs2** |
|---|---|---|---|---|---|---|
| **Composition (mol %)** | **K for Na** | **K for Na** | **Rb for Na** | **Rb for Na** | Cs **for Na** | **Cs for Na** |
| SiO₂ | 69.13 | 69.25 | 69.11 | 69.16 | 68.94 | 68.89 |
| Al₂O₃ | 10.59 | 10.60 | 10.57 | 10.54 | 10.51 | 10.50 |
| MgO | 5.38 | 5.32 | 5.43 | 5.38 | 5.43 | 5.40 |
| Na₂O | 13.83 | 12.82 | 13.85 | 12.89 | 14.05 | 13.18 |
| K₂O | 0.97 | 1.92 | | | | |
| Rb₂O | | | 0.94 | 1.94 | | |
| Cs₂O | | | | | 0.97 | 1.92 |
| SnO₂ | 0.10 | 0.10 | 0.09 | 0.10 | 0.10 | 0.10 |
| | | | | | | |

| **Properties** | **K1** | **K2** | **Rb1** | **Rb2** | **Cs1** | **Cs2** |
|---|---|---|---|---|---|---|
| Anneal Pt (C): | 660.9 | 661 | 659.2 | 652 | 660.4 | 660 |
| Strain Pt (C): | 610.4 | 608.5 | 607.5 | 600.6 | 608.6 | 607.7 |
| Softening Pt (C): | 906.4 | 913.3 | 904.9 | 907 | 908.1 | 920.2 |
| Glass color | transparent | transparent | transparent | transparent | transparent | transparent |
| Density (g/cm^3): | 2.43 | 2.43 | 2.458 | 2.486 | 2.484 | 2.536 |
| CTE (x10^-7/C): | 86.0 | 89.0 | 84.0 | 87.6 | 84.4 | 82.4 |
| Liquidus Temp (C): | 1075 | 1085 | 1080 | 1060 | 1050 | 1175 |
| Primary Devit Phase: | Forsterite | Forsterite | Forsterite | Forsterite | Forsterite | Unknown |
| Liquidus Visc (Poise): | | | | | | |
| Poisson's Ratio: | 0.209 | 0.211 | 0.212 | 0.21 | 0.214 | 0.218 |
| Shear Modulus (Mpsi): | 4.305 | 4.316 | 4.283 | 4.279 | 4.242 | 4.21 |
| Young's Modulus (Mpsi): | 10.412 | 10.457 | 10.385 | 10.351 | 10.303 | 10.255 |
| Refractive Index: | 1.50020 | 1.50025 | 1.50101 | 1.50146 | 1.50205 | 1.50400 |
| SOC (nm/cm/MPa): | 29.47 | 29.35 | 29.16 | 28.75 | 28.75 | 28.31 |

**Table 2. Ion exchange properties of the glasses listed Tables 1a-d.**

| | | **Ion Exchange at 410°C** | | | | | | | **Ion Exchange for 8 hrs** | | | |
|---|---|---|---|---|---|---|---|---|---|---|---|---|
| | | **CS (4 h)** | **CS (8 h)** | **CS (16 h)** | **DOL (4 h)** | **DOL (8 h)** | **DOL (16 h)** | | **CS (370C)** | **CS (450C)** | **DOL (370C)** | **DOL (450C)** |
| | | | | | | | | | | | | |
| **Base** | **Base glass** | 1061 | 1036 | 1007 | 29.6 | 42.3 | 56.0 | | 1070 | 943 | 23.0 | 64.7 |
| | | | | | | | | | | | | |
| **Nb1** | **Nb for Mg** | 1076 | 1053 | 1025 | 26.9 | 39.4 | 51.4 | | 1081 | 981 | 21.7 | 57.8 |
| **Nb2** | **Nb for Mg** | 1076 | 1057 | 1044 | 25.3 | 37.2 | 48.4 | | 1079 | 989 | 20.4 | 54.7 |
| **Nb3** | **Nb for Mg** | 1066 | 1066 | 1051 | | 37.0 | 49.1 | | 1064 | 1015 | 19.5 | 53.8 |
| **Nb4** | **Nb for Al** | 1066 | 1035 | 1004 | 24.9 | 36.6 | 48.6 | | 1065 | 956 | 19.5 | 54.0 |
| | | | | | | | | | | | | |
| **Zr1** | **Zr for Si** | 1129 | 1101 | 1086 | 26.7 | 35.4 | 51.8 | | 1121 | 1056 | 20.8 | 55.0 |
| **Zr2** | **Zr for Si** | 1157 | 1140 | 1121 | 22.8 | 33.8 | 45.9 | | 1130 | 1097 | 18.4 | 49.6 |
| **Zr3** | **Zr on top** | 1139 | 1119 | 1102 | 25.1 | 37.2 | 49.1 | | 1117 | 1075 | 19.7 | 53.6 |
| | | | | | | | | | | | | |
| **Fe1** | **Fe for Mg** | 1334 | 1254 | 1218 | 24.1 | 38.6 | 48.3 | | 1300 | 1178 | 20.0 | |
| **Fe2** | **Fe for Al** | 1185 | 1148 | 1161 | 21.9 | 32.5 | 41.3 | | 1225 | 1035 | 16.9 | 45.2 |
| **Fe3** | **Fe on top** | 1240 | 1209 | 1177 | 22.6 | 32.9 | 43.9 | | 1233 | 1108 | 18.0 | 48.7 |
| | | | | | | | | | | | | |
| **V1** | **V for Al** | 870 | 825 | 810 | 31.4 | 45.7 | 60.6 | | 912 | 720 | 24.5 | 67.7 |
| **V2** | **V for Al** | 682 | | | 31.6 | | | | 751 | | 24.6 | |
| **V3** | **V on top** | 992 | 966 | 935 | 30.9 | 45.5 | 61.1 | | 1014 | 879 | 25.3 | 66.9 |
| **V4** | **V for Si** | 981 | 958 | 927 | 31.1 | 45.9 | 60.2 | | 1003 | 873 | 25.5 | 65.7 |
| **V5** | **V-Al for Si** | 1076 | 1050 | 1032 | 29.9 | 44.4 | 58.1 | | 1085 | 980 | 23.7 | 64.1 |
| | | | | | | | | | | | | |
| **Y1** | **Y for Al** | 1065 | 1059 | 1043 | 18.8 | 27.9 | 37.0 | | 1059 | 1025 | 14.4 | 38.8 |
| **Y2** | **Y for Al** | | | 787 | | | 18.0 | | | | | |
| | | | | | | | | | | | | |
| **Mn1** | **Mn for Al** | 996 | 958 | 898 | 23.0 | 33.1 | 46.1 | | 1027 | 823 | 17.5 | 50.5 |
| **Mn2** | **Mn for Al** | 905 | 832 | 785 | 16.5 | 24.1 | 32.6 | | 974 | 687 | 12.5 | 36.8 |
| **Mn3** | **Mn on top** | 1085 | 1067 | 1037 | 24.3 | 35.3 | 47.4 | | 1101 | 978 | 18.7 | 51.9 |
| **Mn4** | **Mn for Si** | 1105 | 1079 | 1056 | 23.2 | 34.5 | 45.1 | | 1120 | 994 | 18.2 | 50.1 |
| **Mn5** | **Mn-Al for Si** | 1122 | 1100 | 1086 | 25.3 | 38.0 | 50.4 | | 1128 | 1035 | 20.0 | 54.9 |
| | | | | | | | | | | | | |
| **K1** | **K for Na** | 1008 | 989 | 960 | 33.4 | 49.8 | 66.6 | | 1012 | | 26.5 | |
| **K2** | **K for Na** | 946 | 925 | 905 | 38.3 | 56.6 | 73.7 | | 946 | 870 | 30.5 | 80.3 |
| **Rb1** | **Rb for Na** | 993 | 953 | 921 | 26.5 | 40.0 | 53.9 | | 1025 | 876 | 20.8 | 59.9 |
| **Rb2** | **Rb for Na** | 922 | 881 | 850 | 25.2 | 37.8 | 51.4 | | 946 | 809 | 18.9 | 55.8 |
| **Cs1** | **Cs for Na** | 995 | 972 | 943 | 23.0 | 33.2 | 45.1 | | 994 | 903 | 17.1 | 49.2 |
| **Cs2** | **Cs for Na** | 916 | 903 | 890 | 18.7 | 27.4 | 35.3 | | 906 | 857 | 14.1 | 41.0 |

**Table 3. Ion exchange properties of selected glasses from Tables 1a-d. The compressive stress (CS) at a fixed depth of layer (DOL) of 50 µm and ion exchange time required to achieve a depth of layer of 50 µm were calculated from ion exchange data for annealed samples at 410°C for various times in technical grade KNO₃. Values in parentheses indicate that the ion exchange properties of the glasses are inferior to the base glass composition. Values not in parentheses indicate that the ion exchange properties are superior to those of the base glass composition.**

| | | **CS @ 50 µm (Mpa)** | **Time to 50 µm (h)** |
|---|---|---|---|
| **Base** | **Base glass** | 1019 | 12.1 |
| | | | |
| **Nb1** | **Nb for Mg** | 1029 | (14.3) |
| **Nb2** | **Nb for Mg** | 1041 | (16.2) |
| **Nb3** | **Nb for Mg** | 1050 | (15.9) |
| **Nb4** | **Nb for Al** | (1000) | (16.3) |
| | | | |
| **Zr1** | **Zr for Si** | 1086 | (15.1) |
| **Zr2** | **Zr for Si** | 1114 | (18.6) |
| **Zr3** | **Zr on top** | 1100 | (15.9) |
| | | | |
| **Fe1** | **Fe for Mg** | 1206 | (16.0) |
| **Fe2** | **Fe for Al** | 1141 | (22.0) |
| **Fe3** | **Fe on top** | 1159 | (20.0) |
| | | | |
| **V1** | **V for Al** | (827) | 10.4 |
| **V3** | **V on top** | (957) | 10.4 |
| **V4** | **V for Si** | (947) | 10.5 |
| **V5** | **V-AI for Si** | 1043 | 11.2 |
| | | | |
| **Y1** | **Y for Al** | 1028 | (28.2) |
| | | | |
| **Mn1** | **Mn for Al** | (883) | (18.7) |
| **Mn2** | **Mn for Al** | (652) | (36.7) |
| **Mn3** | **Mn on top** | 1033 | (17.2) |
| **Mn4** | **Mn for Si** | 1045 | (18.8) |
| **Mn5** | **Mn-Al for Si** | 1085 | (15.2) |
| | | | |
| **K1** | **K for Na** | (986) | 8.7 |
| **K2** | **K for Na** | (932) | 6.9 |
| **Rb1** | **Rb for Na** | (930) | (13.5) |
| **Rb2** | **Rb for Na** | (852) | (14.9) |
| **Cs1** | **Cs for Na** | (932) | (19.2) |
| **Cs2** | **Cs for Na** | (867) | (30.3) |

The glasses described herein, particularly when ion exchanged, may be used as cover plates or windows for portable or mobile electronic communication and entertainment devices, such as cellular phones, music players, and information terminal (IT) devices, such as laptop computers and the like.

While typical embodiments have been set forth for the purpose of illustration, the foregoing description should not be deemed to be a limitation on the scope of the disclosure or appended claims.

## Claims

1. An alkali aluminosilicate glass, the alkali aluminosilicate glass comprising from 62 mol% to 72 mol% SiO₂, from 5 mol% to 12 mol% Al₂O₃, from 12 mol% to 16 mol% Na₂O and from more than 1 mol% to 10 mol% of at least one metal oxide selected from the group consisting of Nb₂O₅, V₂O₅, Y₂O₃, and MnO₂, wherein Al₂O₃(mol%) - Na₂O(mol%) ≤ 2 mol%, and wherein the alkali aluminosilicate glass is ion exchanged and has a surface and a layer under compressive stress extending from the surface to a depth of layer, wherein the compressive stress is at least 1 GPa and the depth of layer is at least 25 µm.

2. The alkali aluminosilicate oxide of Claim 1, further comprising from 1 mol% to 7 mol% MgO.

3. The alkali aluminosilicate glass of Claim 1 or Claim 2, wherein the alkali aluminosilicate glass is colorless.

4. A method of making an ion exchanged alkali aluminosilicate glass, the method comprising:
a. providing an alkali aluminosilicate glass, the alkali aluminosilicate glass comprising from 62 mol% to 72 mol% SiO₂, from 5 mol% to 12 mol% Al₂O₃, from 12 mol% to 16 mol% Na₂O and from more than 1 mol% to 10 mol% at least one metal oxide selected from the group consisting of Nb₂O₅, V₂O₅, Y₂O₃, and MnO₂, wherein the alkali metal oxide includes Na₂O and Al₂O₃(mol%) - Na₂O(mol%) ≤ 2 mol%; and
b. ion exchanging the alkali aluminosilicate glass for a predetermined time to form a layer under a compressive stress extending from a surface of the alkali aluminosilicate glass to a depth of layer, wherein the compressive stress is at least 1 GPa.

5. The method of Claim 4, further comprising from 1 mol% to 7 mol% MgO.

## Patentansprüche

1. Alkali-Aluminosilikatglas, wobei das Alkali-Aluminosilikatglas 62 Mol-% bis 72 Mol-% SiO₂, 5 Mol-% bis 12 Mol-% Al₂O₃, 12 Mol-% bis 16 Mol-% Na₂O und mehr als 1 Mol-% bis 10 Mol-% mindestens eines Metalloxids umfasst, das ausgewählt ist aus der Gruppe bestehend aus Nb₂O₅, V₂O₅, Y₂O₃ und MnO₂, mit Al₂O₃(Mol-%) - Na₂O(MOl-%) ≤ 2 Mol-%, und wobei das Alkali-Aluminosilikatglas ionenausgetauscht ist und eine Oberfläche und eine Schicht unter Druckspannung aufweist, die sich von der Oberfläche zu einer Schichttiefe erstreckt, wobei die Druckspannung mindestens 1 GPa beträgt, und wobei die Schichttiefe mindestens 25 µm beträgt.

2. Alkali-Aluminosilikatglas nach Anspruch 1, ferner umfassend 1 Mol-% bis 7 Mol-% MgO.

3. Alkali-Aluminosilikatglas nach Anspruch 1 oder Anspruch 2, wobei das Alkali-Aluminosilikatglas farblos ist.

4. Verfahren zur Herstellung eines Alkali-Aluminosilikatglases mit lonenaustausch, wobei das Verfahren folgendes umfasst:
a. Bereitstellen eines Alkali-Aluminosilikatglases, wobei das Alkali-Aluminosilikatglas 62 Mol-% bis 72 Mol-% SiO₂, 5 Mol-% bis 12 Mol-% Al₂O₃, 12 Mol-% bis 16 Mol-% Na₂O und mehr als 1 Mol-% bis 10 Mol-% mindestens eines Metalloxids umfasst, das ausgewählt ist aus der Gruppe bestehend aus Nb₂O₅, V₂O₅, Y₂O₃ und MnO₂, wobei das Alkalimetalloxid Na₂O und Al₂O₃(Mol-%) - Na₂O(Mol-%) ≤ 2 Mol-% umfasst;
b. lonenaustausch des Alkali-Aluminosilikatglases über eine vorbestimmte Zeit, um eine Schicht unter Druckspannung zu bilden, die sich von einer Oberfläche des Alkali-Aluminosilikatglases zu einer Schichttiefe erstreckt, wobei die Druckspannung mindestens 1 GPa beträgt.

5. Verfahren nach Anspruch 4, ferner umfassend 1 Mol-% bis 7 Mol-% MgO.

## Revendications

1. Verre d'aluminosilicate alcalin, le verre d'aluminosilicate alcalin comprenant de 62 % en moles à 72 % en moles de SiO₂, de 5 % en moles à 12 % en moles d'Al₂O₃, de 12 % en moles à 16 % en moles de Na₂O et de plus de 1 % en moles à 10 % en moles d'au moins un oxyde de métal sélectionné dans le groupe constitué par Nb₂O₅, V₂O₅, Y₂O₃ et MnO₂, avec Al₂O₃(% en moles) - Na₂O(% en moles) ≤ 2 % en moles, et le verre d'aluminosilicate alcalin étant à ions échangés et ayant une surface et une couche sous contrainte de compression s'étendant à partir de la surface jusqu'à une profondeur de couche, la contrainte de compression étant d'au moins 1 GPa et la profondeur de couche étant d'au moins 25 µm.

2. Oxyde d'aluminosilicate alcalin selon la revendication 1, comprenant en outre de 1 % en moles à 7 % en moles de MgO.

3. Verre d'aluminosilicate alcalin selon la revendication 1 ou la revendication 2, le verre d'aluminosilicate alcalin étant incolore.

4. Procédé de fabrication d'un verre d'aluminosilicate alcalin à ions échangés, le procédé comprenant les étapes consistant à :
a. fournir un verre d'aluminosilicate alcalin, le verre d'aluminosilicate alcalin comprenant de 62 % en moles à 72 % en moles de SiO₂, de 5 % en moles à 12 % en moles d'Al₂O₃, de 12 % en moles à 16 % en moles de Na₂O et de plus de 1 % en moles à 10 % en moles d'au moins un oxyde de métal sélectionné dans le groupe constitué par Nb₂O₅, V₂O₅, Y₂O₃ et MnO₂, l'oxyde de métal alcalin incluant du Na₂O, et Al₂O₃(% en moles) - Na₂O(% en moles) ≤ 2 % en moles ; et
b. l'échange d'ions du verre d'aluminosilicate alcalin pendant une durée prédéterminée afin de former une couche sous une contrainte de compression s'étendant à partir d'une surface du verre d'aluminosilicate alcalin jusqu'à une profondeur de couche, la contrainte de compression étant d'au moins 1 GPa.

5. Procédé selon la revendication 4, comprenant en outre de 1 % en moles à 7 % en moles de MgO.
